# EUROPEAN PATENT SPECIFICATION

(11) **EP 4 306 454 B1**
(45) Date of publication and mention of the grant of the patent: **17.09.2025**
(21) Application number: 23185185.8
(22) Date of filing: 13.07.2023
(51) Int. Cl.: B65G 17/08, B65G 21/18

(54) **SPIRAL-LIKE CONVEYING DEVICE**
SPIRALFÖRMIGE FÖRDERVORRICHTUNG
DISPOSITIF DE TRANSPORT EN SPIRALE

(30) Priority: 14.07.2022 IT 202200014845
(43) Date of publication of application: 17.01.2024
(73) Proprietor: SIT S.P.A., 20090 Cusago (MI) (IT)
(72) Inventor: SCAGLIA, Riccardo, 20090 Cusago (MI) (IT); GESSI, Giovanni, 20090 Cusago (MI) (IT)
(74) Representative: Marietti, Andrea

(56) References cited:
- EP-A1- 3 966 135
- CN-B- 113 022 954
- CN-U- 206 314 493
- CN-Y- 200 996 766
- US-A1- 2018 170 680

## Description

The present invention refers to motor-driven conveying devices and more specifically spiral-like conveying devices, in which a conveyor belt is wound in a helical path around a tower.

These types of conveying devices are typically used to convey articles on the respective belt, e.g. (but not exclusively) food, through refrigerated or heated environments. Indeed, spiral conveyors compactly provide a long path within such a heated or cooled environment, compared to, e.g., a linear belt.

Typically, the belt is formed by a plurality of links constrained to each other with a certain clearance, so as to facilitate the passage of the belt from a typically rectilinear path (upstream and downstream of the tower) to a curved path (around the tower). Devices equipped with a helical track supported on a non-rotating central tower are known. The conveyor belt is driven around the helical track by transmission toothed wheel. These systems usually apply high tension, particularly at the point of contact between the transmission and belt links.

Systems in which a conveyor belt is driven by friction between the inner edge of the belt and the outer surface of a rotating tower are further known. This allows a reduced tension of the belt but causes significant wear and tear of the belt and the outer surface of the tower and requires a considerable amount of energy to ensure the belt dragging by friction.

Systems are known in which the tower has protrusions that mesh with the belt links. However, it is complex to mesh the belt correctly, in particular it is complex to ensure the exact matching between links and protrusions, also considering that this operation takes place at the passage of the belt from a rectilinear path to a curved path, a condition in which a respective displacement between the links of the same belt takes place.

US2018/170680 discloses a drive bar apparatus for use in a helical conveyor system, comprising at least one tapered drive bar configured to be mounted to a central drum of the helical conveyor system, wherein each of the at least one tapered drive bars comprises a tapered tip having a conical outer surface for urging protrusions extending from conveyor belting to be engaged by the central drum to a first side or a second side of the at least one tapered drive bar, and a bar portion extending from the tapered tip and having a varying height which increases from the tapered tip to enable the bar portion to progressively increase engagement with the protrusions as the conveyor belting moves up the central drum. More particularly, US 2018/170680 A1 discloses a spiral-like conveying device according to the preamble of claim 1.

Object of the present invention is therefore to solve the problems of the known art and, in particular, to provide a spiral-like conveying device, with an effective coupling between drive tower and belt, with reduced wear and tear.

These and other objects are reached by the present invention according to the accompanying claims.

In particular, the present invention relates to a spiral-like conveying device comprising: a transmitting tower having a substantially cylindrical body, the tower being rotatable around an axis of rotation and having a height measured along the axis of rotation extending between a first end of the tower and a second end of the tower, comprising a plurality of protrusions arranged on the outer surface of the cylindrical body; a supporting element defining a spiral-like path that is wound around the tower; a conveyor belt comprising a plurality of links constrained to each other and arranged along at least the spiral-like portion of the supporting element; wherein the belt is formed by an alternation of first and second links, the first and second links being arranged so that the inner edge of the first links is arranged, in use, at the spiral-like portion of the supporting element, at a distance from the axis of rotation, measured on a plane perpendicular to such axis, which is less than the distance between the inner edge of the second links and the axis of rotation; wherein the tower protrusions mesh with at least part of the first links and not with the second links; and wherein the protrusions extend for only part of the height of the transmitting tower and are absent next to at least one end of the tower so that, in use, the spiral-like path comprises an initial portion in which the tower protrusions do not mesh with the first links and a second portion arranged downstream of the initial portion, considering the feed direction of the belt along the path, in which the tower protrusions mesh with the first links of the belt.

Thanks to the present solution, therefore, the links of the belt move forward in an idle manner along the initial portion of the spiral-like path and are equipped with freedom of movement for the passage from a typically, substantially rectilinear, feed condition (upstream of the spiral-like path), to a circular path, along the spiral-like path. Thereafter, once the passage to a circular path has been made, the links mesh with the tower protrusions, so that the belt is allowed to move synchronously, by push through belt and protrusions which mesh with each other, and not therefore by friction.

In other words, in the condition of use, the links that are at the initial portion of the spiral-like path are dragged by the links that are arranged at the second portion of the path, which have already meshed with the tower protrusions.

Moreover, thanks to the present solution, vibrations on the system are considerably reduced, as are the forces that are exerted on the belt. This clearly results in reduced wear and tear of the present solution, as well as reduced energy consumption, compared to the known art.

Finally, it should be noted that the present solution achieves these benefits while maintaining a simple construction of the structure.

Preferably, the cylindrical body has constant diameter for the entire height of the tower. This allows a simple implementation of the piece.

Preferably, the pitch of the first links, at the initial portion of the spiral-like path, is different from the pitch of the first links at the second portion of the spiral-like path. Preferably, the pitch at the initial portion is less than the pitch at the second portion.

Possibly, the protrusions are arranged substantially parallel to the axis of rotation of the transmitting tower or are spirally wound along the body of the transmitting tower, preferably in a direction opposite the spiral-like portion of the supporting element.

The first solution is easy to implement, whereas the second solution, although more complex, provides a better interaction with the belt links. This solution also allows to reduce the sliding friction of the belt on the supports of the same belt.

Possibly, the ratio of the number of first links to the number of second links is 1:1.

Possibly, the protrusions are equidistant from each other. The distance between the protrusions is assessed on the circumference of the transmitting tower.

Possibly, the initial portion of the path extends for at least 30 degrees, typically for at least 45 degrees and generally between 45 and 90 degrees.

Possibly, the protrusions are also absent at the second end of the tower, so as to define an end portion of the path, which is arranged downstream of the second portion, considering the feed direction of the belt, in which the portions of the tower do not mesh with the first links of the belt.

With reference to the accompanying figures, exemplary and non-limiting embodiments of the present invention are now discussed, wherein:
- figure 1 is a perspective view of a spiral-like conveying device according to a first embodiment, in which the belt is not shown for ease of viewing;
- figure 2 is a schematic, not-to-scale, side view of a transmitting tower of a conveying device according to an alternative embodiment to figure 1, in which the path of the supporting element is shown in simplified form;

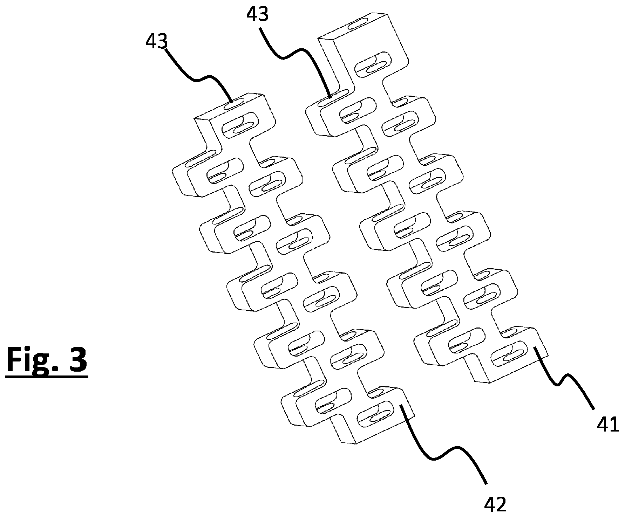

- figure 3 is a perspective view of the first and second links of a conveyor belt of a conveying device according to a first embodiment;
- figure 4 is a schematic plan view of a portion of a conveyor belt according to an embodiment of the present invention;
- figure 5 is a schematic sectional view of a portion of a transmitting tower and the respective constraint between the first and second links of a conveyor belt and the transmitting tower protrusions of figure 1.

According to the present invention, the spiral-like conveying device 1 comprises a transmitting tower 2 having a substantially cylindrical body 20. The transmitting tower 2 is typically hollow.

The transmitting tower 2 can be rotated around an axis of rotation A.

The transmitting tower 2 has height H measured along the axis of rotation A that extends between a first end 21 and a second end 22. The body 20 preferably has a constant diameter for the entire height H of the transmitting tower 2.

The transmitting tower 2 has a plurality of protrusions 23 which protrude from the body 20, typically substantially radial thereto.

The protrusions 23 have dimension D, measured on the axis of rotation A, less than the height H of the transmitting tower 2.

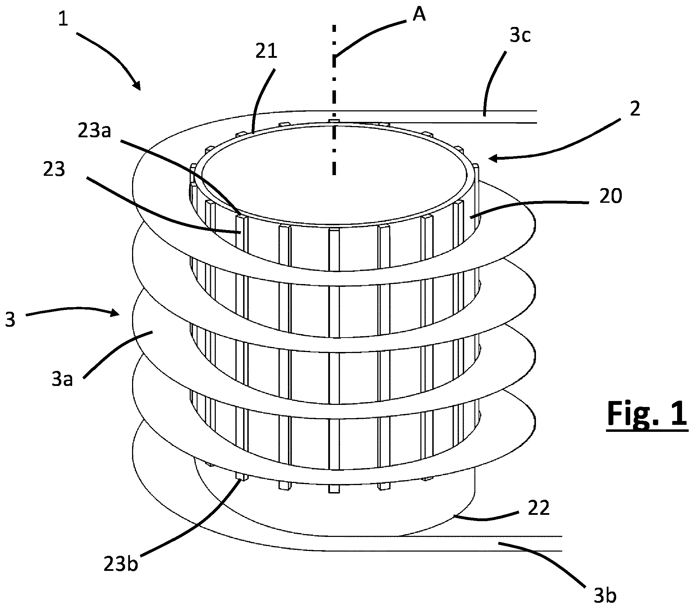

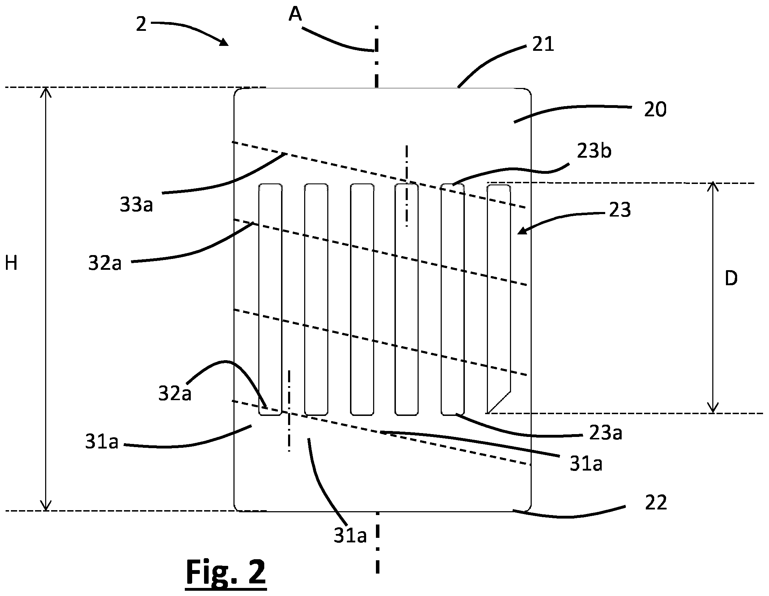

The protrusions may have different path along the dimension D. For example, as in figures 1 and 2, the protrusions may be substantially parallel to the axis of rotation A, i.e. be arranged substantially axial to the body 20, on the respective outer surface. Alternatively, the protrusions can be spirally arranged along the body 20 of the transmitting tower 2. Preferably, the spiral formed by the protrusions 23 has the winding direction opposite the path of the conveyor belt 4, which is better discussed hereinafter.

Optionally, the protrusions 23, at the respective ends 23a, 23b, have portions with thickness measured along the perimeter of the body 20 of the transmitting tower 2, i.e. in a substantially tangential direction with respect to the axis of rotation A, which is progressively increasing.

The protrusions are typically equidistant from each other, where the distance between two protrusions is measured on the circumference of the body 20 along a plane perpendicular to the axis of rotation A.

The spiral-like conveying device 1 further comprises a supporting element 3, which defines a spiral-like path 3a that is wound around the transmitting tower 2, i.e. has a helically shaped portion that is arranged around the transmitting tower 2 so as to define the spiral-like path 3a.

The supporting element 3 is typically placed at a distance measured in a radial direction with respect to the axis of rotation A, from the transmitting tower 2. In addition, typically, the supporting element 3 is not rotated integrally to the transmitting tower 2. In other words, when the transmitting tower rotates around the rotation axis A, a relative rotation between the transmitting tower and the supporting element takes place.

The supporting element 3, in the portion which defines the spiral-like path 3a, is therefore typically arranged as a screw thread, in which the transmitting tower 2 acts as the shank of the screw, although the transmitting tower 2 and the supporting element 3 are typically separate elements.

The supporting element 3 may also have portions 3b, 3c that define at least part of the path of the conveyor belt 4 upstream and downstream of the device 1, typically a substantially rectilinear path.

Alternatively, the supporting element 3 could have only the portion defining the spiral-like path 3a and be connected to outer supports adapted to support a conveyor belt 4 upstream and downstream of transmitting tower 2.

As discussed, the spiral-like conveying device 1 further has a conveyor belt 4 which, in condition of use, is slidably arranged along the supporting element 3.

In particular, by means of the interaction, which is better discussed hereinafter, between the transmitting tower 2 and the conveyor belt 4, the conveyor belt 4 is forced to move forward along the spiral-like path 3a of the supporting element 3, when the transmitting tower 2 is rotated around the axis of rotation A.

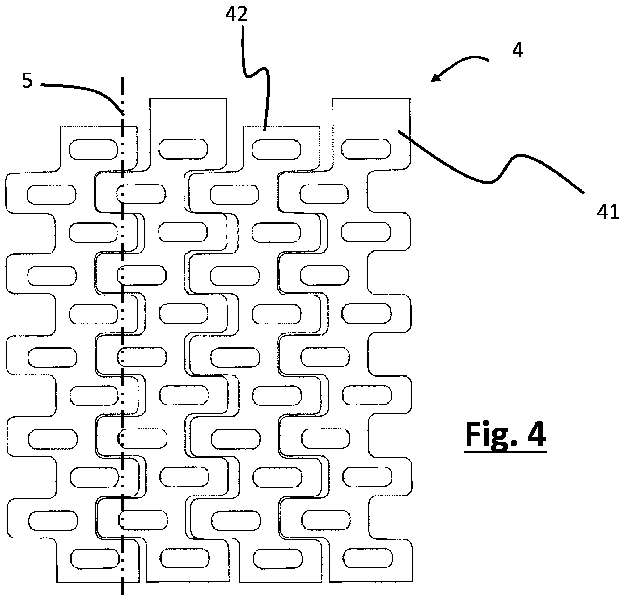

The conveyor belt 4 comprises a plurality of links 41, 42 constrained to each other. Various methods for constraining the links to each other are possible. Typically, in a known manner, the links 41, 42 have seats 43 for the insertion of a typically straight pin 5 (schematically shown in figure 4 by means of its axis). The links 41, 42 may therefore have a staggered shape, as in the embodiment shown in the figures, so that the same straight pin 5 can be constrained to two subsequent links 41, 42. The seats 43 are typically made to allow clearance to the pin 5, so as to allow relative rotation, albeit limited, between two subsequent links 41, 42. This facilitates the belt in travelling a curved path and, in particular, the transition from a rectilinear path to a curved path, as e.g. typically takes place when passing from the path portion upstream of the transmitting tower 2 to the spiral-like path 3a of the supporting element 3.

The conveyor belt 4 has at least first links 41 and second links 42 alternating with each other. In a preferred embodiment, the alternation is 1:1, i.e. a first link 41 is followed by a second link 42, although this ratio may be different in other embodiments. For example, in a 2:1 ratio, two first links are followed by a second link 42, then again two first links 41 and a second link 42, etc.

In general, the conveyor belt typically has an M:N alternation of first and second links 41, 42, such that the belt has a repetitive succession of M first links 41 and N second links 42.

The conveyor belt 4 is configured so that, in use, at the spiral-like path 3a of the supporting element 3, the inner edge 41a of the first links 41 is arranged at a distance from the axis of rotation A, which is measured on a plane perpendicular to this axis, less than the distance between the inner edge 42a of the second links and the axis of rotation A. The present configuration is such that the protrusions 23 of the transmitting tower 2 engage, i.e. mesh with the first links 41 of the conveyor belt 4 but do not engage, i.e. do not mesh with, the second links 42.

In other words, in use, the distance between the outer edge 23c of the protrusions 23 and the axis of rotation A is greater than the distance between the inner edge 41a of the first links 41 and the axis of rotation A but is less than the distance between the inner edge 42a of the second links and the axis of rotation A.

Thereby, during the rotation of the transmitting tower 2, the protrusions 23 come into contact with the first links 41 but not with the second links 42.

Typically, the first links 41 have a greater width (i.e. the dimension of the upper surface of the conveyor belt 4 perpendicular to the feed direction of the belt along the supporting element 3) than the second links 42.

The protrusions 23 are not present next to at least one of the ends 21, 22 of the transmitting tower 2, so that, in use, the spiral-like path 3a has an initial portion 31a in which the protrusions do not mesh (because they are absent) with the links 41, 42 of the conveyor belt 4, and a second portion 32a, downstream of the initial portion 31, in which the protrusions 23 are present and therefore mesh with the first links 41 of the conveyor belt 4.

It should be noted that "downstream" and "upstream" refer to the feed direction in the conveyor belt 4 along the supporting element 3.

In the accompanying figures, the conveyor belt 4 travels uphill along the supporting element 3. The second portion of the path 32a is, therefore, arranged at a height higher than the initial portion 31a, which is substantially at the feet of the transmitting tower 2, as e.g. shown, schematically, in figure 2. In possible alternatives, the conveyor belt may travel downhill along the supporting member. In this case, the second portion 32a would be arranged below the initial portion 31a of the path 3, which would then typically be at the top of the transmitting tower 2.

In the initial portion 31a of the spiral-like path 3a, the links 41, 42 of the conveyor belt 4 move forward in an idle manner along the spiral-like path 3a and are dragged by the links 41, 42 which have already arrived in the second portion 32a instead.

This allows the links 41, 42 to move more freely along the initial portion 31a of the spiral-like path 3a, so as to facilitate the transition of the conveyor belt 4 into a curved, helical path around the transmitting tower 2.

In particular, the pitch of links 41, 42, i.e. the distance between two successive links, which is measured along the feed direction of the conveyor belt 4 along the spiral-like path 3a, is different in the initial portion 31a, compared to the pitch of the links 41, 42 in the second portion 32a of the spiral-like path 3a of the supporting element 3. Preferably, the pitch of the links 41, 42 in the initial portion 31a is less than the pitch in the second portion 32a.

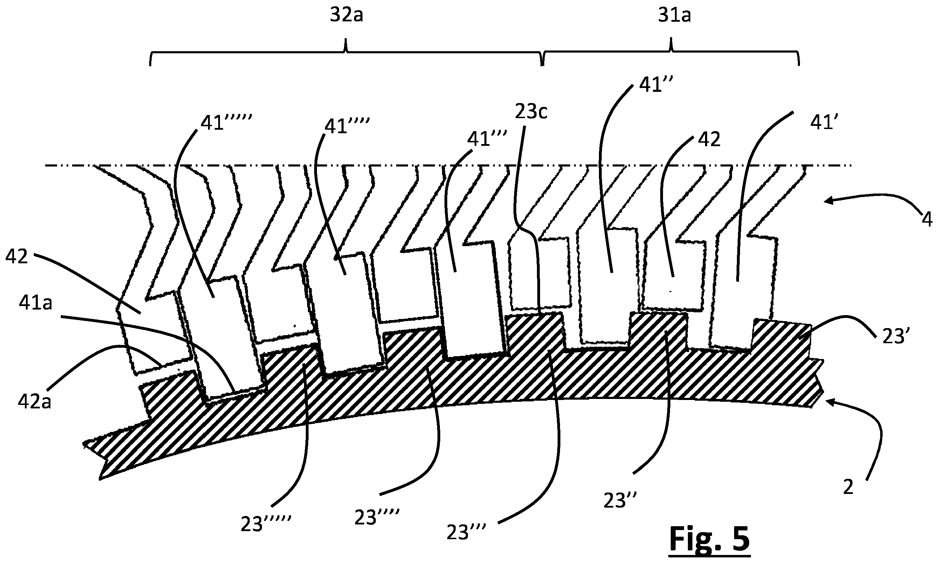

However, the opposite solution is not excluded, e.g. schematised in figure 5 (in which the tower 2 rotates counterclockwise), in which the first links 41', 41" (in figure 5 arranged below the respective protrusions 23', 23") arranged in the initial portion 31a of the spiral-like path 3a have a pitch greater than the pitch of the subsequent first links 41‴ - 41‴ʺ arranged in the second portion 32a of the spiral-like path 3a.

The first links 41', 41", in the initial portion 31a of the spiral-like path 3a, can therefore freely assume a pitch dictated essentially only by the curvature of the spiral-like path 3a.

The subsequent first links 41‴, 41ʺʺ and 41ʺ‴, which are arranged above the first two links 41', 41", mesh with the respective protrusions 23‴, 23ʺʺ, 23‴ʺ, whereby the pitch between the various links is defined by the distance between the protrusions 23‴, 23ʺʺ, 23‴ʺ.

According to a further aspect, as it takes place in the initial portion of spiral-like path 3a, it is possible that the protrusions 23 are also absent at the other end 22, 21 of the transmitting tower 2, so as to define an end portion 33a of the spiral-like path 3a downstream of the second portion 32a, in which the links 41, 42 of the conveyor belt 4 are again released from the protrusions 23, as e.g. schematically shown in figure 2. According to a preferred aspect, the initial portion 31a of the spiral-like path 3 extends for at least 30 degrees, i.e. it extends at an angle of at least 30 degrees on the spiral formed by the spiral-like path 3. Even more preferred solutions provide for an extent greater than 45 degrees, even more preferably between 45 and 90 degrees. The end portion 33a, if present, typically extends for an angle smaller than the initial portion. In use, a conveyor belt 4 is arranged on the supporting element. The first links 41 of the conveyor belt 4 mesh with the protrusions of the transmitting tower 2 in the second portion of the spiral-like path 3. On the other hand, in the first section 31a of the spiral-like path 3, the belt is arranged in an idle manner on the supporting element with respect to the transmitting tower 2.

The rotation of the transmitting tower 2 and the meshing between the first links 41 of the conveyor belt 4 cause the conveyor belt 4 to move forward along the supporting element 3.

## Claims

1. Spiral-like conveying device (1) comprising:
• A transmitting tower (2) having a substantially cylindrical body (20), the tower (2) being rotatable around an axis of rotation (A) and having a height (H) measured along the axis of rotation (A) which extends between a first end (21) of the tower and a second end (22) of the tower, comprising a plurality of protrusions (23) arranged on the outer surface of the cylindrical body;
• A conveyor belt (4) comprising a plurality of links (41, 42) constrained to each other, and arranged along at least the spiral-like portion of the supporting element (3);
wherein the belt (4) is formed by an alternation of first (41) and second (42) links;
and wherein the protrusions (23) extend only for part (D) of the height (H) of the transmitting tower (2), and are absent next to at least one of the ends (21, 22) of the tower (2), so that, in use, the spiral-like path comprises an initial portion (31a), in which the protrusions (23) of the tower (2) do not mesh with the first links (41), and a second portion (32a), arranged downstream of the initial portion, considering the feed direction of the belt along the path, in which the protrusions (23) of the tower (2) mesh with the first links (41) of the belt, **characterised by** a supporting element (3) which defines a spiral-like path (3a) which winds around the tower (2); and the first (41) and the second (42) links being arranged so that, in use, at the spiral-like portion of the supporting element (3), the inner edge (41a) of the first links (41) is arranged, at a distance from the axis of rotation (A), measured on a plane perpendicular to this axis, less than the distance between the inner edge (42a) of the second links (42) and the axis of rotation (A); wherein the protrusions (23) of the tower (2) mesh with at least part of the first links (41) and not with the second links (42).

2. Device according to claim 1, wherein the cylindrical body has constant diameter for the entire height (H) of the tower (2).

3. Device according to claim 1 or 2, wherein due to the meshing with the protrusions (23) of the tower (2) at the second portions (32a), the pitch of the first links (41), at the initial portion (31a) of the spiral-like path, is different from the pitch of the first links (41) at the second portion (32a) of the spiral-like path; said pitch between the first links (41) at the second portion (32a) of the spiral-like path is defined by the distance between the protrusions (23).

4. Device according to one of the preceding claims, wherein the protrusions (23) are arranged substantially parallel to the axis of rotation (A) of the transmitting tower (2), or are spirally wound along the body (20) of the transmitting tower (2), preferably in a direction opposite the spiral-like portion of the supporting element (3).

5. Device according to one of the preceding claims, wherein the ratio of the number of first links (41) to the number of second links (42) is 1:1.

6. Device according to one of the preceding claims, wherein the protrusions (23) are equidistant from each other.

7. Device according to one of the preceding claims, configured so that, in use, the initial portion (31a) of the path extends for at least 30 degrees, more preferably at least 45 degrees, even more preferably between 45 and 90 degrees.

8. Device according to one of the preceding claims, wherein the protrusions (23) are also absent at the second end (21, 22) of the transmitting tower (2), so as to define an end portion (33a) of the spiral-like path (3), which is arranged downstream of the second portion (32a), considering the feed direction of the belt (4), in which the protrusions (23) of the tower (2) do not mesh with the first links (41) of the belt (4).

## Patentansprüche

1. Spiralförmige Fördervorrichtung (1) aufweisend:
• einen Sendeturm (2) mit einem im Wesentlichen zylindrischen Körper (20), wobei der Turm (2) um eine Drehachse (A) drehbar ist und eine entlang der Drehachse (A) gemessene Höhe (H) aufweist, die sich zwischen einem ersten Ende (21) des Turms und einem zweiten Ende (22) des Turms erstreckt, aufweisend eine Vielzahl von Vorsprüngen (23), die auf der Außenfläche des zylindrischen Körpers angeordnet sind;
• ein Förderband (4), aufweisend eine Vielzahl von aneinander gezwungenen und zumindest entlang des spiralförmigen Abschnitts des Stützelements (3) angeordneten Gliedern (41, 42);
wobei das Band (4) aus abwechselnd ersten (41) und zweiten (42) Gliedern gebildet ist;
und wobei sich die Vorsprünge (23) nur über einen Teil (D) der Höhe (H) des Sendeturms (2) erstrecken und neben mindestens einem der Enden (21, 22) des Turms (2) fehlen, so dass der spiralförmige Pfad im Betrieb einen Anfangsabschnitt (31a) umfasst, in dem die Vorsprünge (23) des Turms (2) nicht mit den ersten Gliedern (41) in Eingriff stehen, und einen zweiten Abschnitt (32a) umfasst, der in Vorschubrichtung des Bandes entlang des Pfades hinter dem Anfangsabschnitt angeordnet ist, in dem die Vorsprünge (23) des Turms (2) mit den ersten Gliedern (41) des Bandes in Eingriff stehen, **gekennzeichnet durch** ein Stützelement (3), das einen spiralförmigen Pfad (3a) definiert, der um den Turm (2) gewunden ist; und **dadurch, dass** die ersten (41) und zweiten (42) Glieder so angeordnet sind, dass im Gebrauch am spiralförmigen Abschnitt des Stützelements (3) die Innenkante (41a) der ersten Glieder (41) in einem Abstand von der Drehachse (A) angeordnet ist, der, gemessen auf einer Ebene senkrecht zu dieser Achse, geringer ist als der Abstand zwischen der Innenkante (42a) der zweiten Glieder (42) und der Drehachse (A); wobei die Vorsprünge (23) des Turms (2) mit zumindest einem Teil der ersten Glieder (41) in Eingriff stehen und nicht mit den zweiten Gliedern (42);

2. Vorrichtung nach Anspruch 1, wobei der zylindrische Körper über die gesamte Höhe (H) des Turms (2) einen konstanten Durchmesser aufweist.

3. Vorrichtung nach Anspruch 1 oder 2, wobei aufgrund des Eingriffes mit den Vorsprüngen (23) des Turms (2) an den zweiten Abschnitten (32a) sich die Steigung der ersten Glieder (41) am Anfangsabschnitt (31a) des spiralförmigen Pfads von der Steigung der ersten Glieder (41) an dem zweiten Abschnitt (32a) des spiralförmigen Pfades unterscheidet; diese Steigung zwischen den ersten Gliedern (41) am zweiten Abschnitt (32a) des spiralförmigen Pfades ist durch den Abstand zwischen den Vorsprüngen (23) definiert.

4. Vorrichtung nach einem der vorhergehenden Ansprüche, wobei die Vorsprünge (23) im Wesentlichen parallel zur Drehachse (A) des Sendeturms (2) angeordnet sind oder spiralförmig entlang des Körpers (20) des Sendeturms (2) gewunden sind, vorzugsweise in eine Richtung, die dem spiralförmigen Abschnitt des Stützelements (3) entgegengesetzt ist.

5. Vorrichtung nach einem der vorhergehenden Ansprüche, wobei das Verhältnis der Anzahl der ersten Glieder (41) zur Anzahl der zweiten Glieder (42) 1:1 beträgt.

6. Vorrichtung nach einem der vorhergehenden Ansprüche, wobei die Vorsprünge (23) den gleichen Abstand zueinander aufweisen.

7. Vorrichtung nach einem der vorhergehenden Ansprüche, die so konfiguriert ist, dass sich der Anfangsabschnitt (31a) des Pfads im Gebrauch über mindestens 30 Grad, bevorzugter mindestens 45 Grad und noch bevorzugter zwischen 45 und 90 Grad erstreckt.

8. Vorrichtung nach einem der vorhergehenden Ansprüche, wobei die Vorsprünge (23) auch am zweiten Ende (21, 22) des Sendeturms (2) fehlen, um einen Endabschnitt (33a) des spiralförmigen Pfades (3) zu definieren, der in Förderrichtung des Bandes (4) hinter dem zweiten Abschnitt (32a) angeordnet ist, in dem die Vorsprünge (23) des Turms (2) nicht mit den ersten Gliedern (41) des Bandes (4) in Eingriff stehen.

## Revendications

1. Dispositif de transport en spirale (1) comprenant :
• Une tour de transmission (2) ayant un corps sensiblement cylindrique (20), la tour (2) étant rotative autour d'un axe de rotation (A) et ayant une hauteur (H) mesurée le long de l'axe de rotation (A) qui s'étend entre une première extrémité (21) de la tour et une deuxième extrémité (22) de la tour, comprenant une pluralité de protubérances (23) disposées sur la surface extérieure du corps cylindrique ;
• Une bande de transport (4) comprenant une pluralité de maillons (41, 42) contraints les uns aux autres et disposés le long d'au moins la portion en forme de spirale de l'élément de support (3) ;
dans lequel la bande (4) est formée par une alternance de premiers (41) et de deuxièmes (42) maillons ;
et dans lequel les protubérances (23) ne s'étendent que sur une partie (D) de la hauteur (H) de la tour de transmission (2), et sont absentes à côté d'au moins une des extrémités (21, 22) de la tour (2), de sorte que, en cours d'utilisation, la trajectoire en spirale comprend une portion initiale (31a), dans laquelle les protubérances (23) de la tour (2) ne s'engrènent pas avec les premiers maillons (41), et une deuxième portion (32a), disposée en aval de la portion initiale, compte tenu de la direction d'alimentation de la bande le long de la trajectoire, dans laquelle les protubérances (23) de la tour (2) s'engrènent avec les premiers maillons (41) de la bande, **caractérisé par** un élément de support (3) qui définit une trajectoire en spirale (3a) qui s'enroule autour de la tour (2) ; et les premiers (41) et les deuxièmes (42) maillons étant disposés de telle sorte que, en cours d'utilisation, au niveau de la portion en spirale de l'élément de support (3), le bord intérieur (41a) des premiers maillons (41) est disposé à une distance de l'axe de rotation (A), mesurée sur un plan perpendiculaire à cet axe, inférieure à la distance entre le bord intérieur (42a) des deuxièmes maillons (42) et l'axe de rotation (A) ; dans lequel les protubérances (23) de la tour (2) s'engrènent avec au moins une partie des premiers maillons (41) et non avec les deuxièmes maillons (42).

2. Dispositif selon la revendication 1, dans lequel le corps cylindrique a un diamètre constant sur toute la hauteur (H) de la tour (2).

3. Dispositif selon la revendication 1 ou 2, dans lequel du fait de l'engrènement avec les protubérances (23) de la tour (2) au niveau des deuxièmes portions (32a), le pas des premiers maillons (41), au niveau de la portion initiale (31a) de la trajectoire en spirale, est différent du pas des premiers maillons (41) au niveau de la deuxième portion (32a) de la trajectoire en spirale ; ledit pas entre les premiers maillons (41) au niveau de la deuxième portion (32a) de la trajectoire en spirale est défini par la distance entre les protubérances (23).

4. Dispositif selon l'une des revendications précédentes, dans lequel les protubérances (23) sont disposées sensiblement parallèlement à l'axe de rotation (A) de la tour de transmission (2), ou sont enroulées en spirale le long du corps (20) de la tour de transmission (2), de préférence dans une direction opposée à la portion en spirale de l'élément de support (3).

5. Dispositif selon l'une des revendications précédentes, dans lequel le rapport entre le nombre de premiers maillons (41) et le nombre de deuxièmes maillons (42) est de 1:1.

6. Dispositif selon l'une des revendications précédentes, dans lequel les protubérances (23) sont équidistantes les unes des autres.

7. Dispositif selon l'une des revendications précédentes, configuré pour que, en utilisation, la portion initiale (31a) de la trajectoire s'étende sur au moins 30 degrés, plus préférentiellement sur au moins 45 degrés, encore plus préférentiellement entre 45 et 90 degrés.

8. Dispositif selon l'une des revendications précédentes, dans lequel les protubérances (23) sont également absentes à la deuxième extrémité (21, 22) de la tour de transmission (2), de manière à définir une portion d'extrémité (33a) de la trajectoire en spirale (3), qui est disposée en aval de la deuxième portion (32a), compte tenu de la direction d'alimentation de la bande (4), dans laquelle les protubérances (23) de la tour (2) ne s'engrènent pas avec les premiers maillons (41) de la bande (4).
